Europäisches Patentamt

European Patent Office

Office européen des brevets

(11) Publication number: **0 301 809 B1**

# EUROPEAN PATENT SPECIFICATION

(45) Date of publication of patent specification: **09.09.92**  (51) Int. Cl.⁵: **H04N 5/781**, H04N 5/85, G11B 27/36

(21) Application number: **88306875.1**

(22) Date of filing: **26.07.88**

(54) **Video disc players.**

(30) Priority: **28.07.87 JP 188582/87**

(43) Date of publication of application:
**01.02.89 Bulletin  89/05**

(45) Publication of the grant of the patent:
**09.09.92 Bulletin  92/37**

(84) Designated Contracting States:
**DE GB NL**

(56) References cited:
**EP-A- 0 024 858**     **EP-A- 0 223 423**
**FR-A- 2 541 062**     **GB-A- 2 002 990**
**GB-A- 2 136 654**     **US-A- 4 490 810**

(73) Proprietor: **SONY CORPORATION**
**7-35 Kitashinagawa 6-chome Shinagawa-ku**
**Tokyo 141(JP)**

(72) Inventor: **Maruta, Keiji c/o Patents Divison**
**Sony Corporation 6-7-35 Kitashinagawa**
**Shinagawa-ku Tokyo 141(JP)**

(74) Representative: **Pilch, Adam John Michael et al**
**D. YOUNG & CO. 10 Staple Inn**
**London WC1V 7RD(GB)**

## Description

This invention relates to video disc players, and in particular but not exclusively to such players for so-called compact discs having both audio and video signals recorded thereon and which are generally referred to as CDVs (compact discs with video).

Various TV colour systems, such as the NTSC and PAL systems, are employed as recording formats for video discs, and these recording formats are similar to the correspondingly designated standard TV broadcasting systems. These standard TV broadcasting systems differ somewhat from each other. For example, an NTSC video signal has a frame frequency of 30 Hz and 525 horizontal scanning lines in each frame, while a PAL video signal has a frame frequency of 25 Hz and 625 horizontal scanning lines in each frame.

When, for example, a video disc recorded with a video signal according to the PAL system is mistakenly used in a video disc player or reproducing apparatus designated for use with NTSC video discs, that is video discs recorded with video signals according to the NTSC system, the fact that the difference between the frame frequencies of the PAL and NTSC video signals does not exceed 20% of the frame frequency of the NTSC signal makes it possible to achieve locking of the disc rotation servo with the result that an unsatisfactory video signal is obtained at the output of the video disc player. When such an unsatisfactory reproduced video signal is supplied to a monitor, the latter displays a slightly disturbed black-and-white picture which is devoid of colour even though a colour video signal is recorded on the disc being reproduced. The display of such a defective picture on the monitor is frequently misunderstood by the user who believes it is the result of a defect or misoperation of the video disc player, rather than merely the result of seeking to play back or reproduce a video disc recorded with colour video information according to one TV system by means of a video disc player intended for use with video discs recorded with colour video information according to another TV system. As a result of the foregoing, manufacturers or other sources of optical video disc players are frequently subjected to unnecessary complaints or so-called nuisance calls from unjustifiably irate users of such apparatus.

In order to avoid the foregoing problem, it has been proposed to provide an optical video disc player with a device for identifying whether an optical video disc being reproduced has been recorded with colour video signals according to the PAL or NTSC systems by detecting and counting synchronising signals contained in the reproduced video signal. Thus, for example, the number of horizontal synchronising signals between successive vertical synchronising signals, which number is different for the PAL and NTSC systems, may be counted so as to identify whether the optical video disc being reproduced has been recorded according to the PAL or the NTSC systems. However, a rather complicated circuit arrangement including a counter circuit is required for identifying the TV system used for recording the optical video disc in the above-described manner. Further, when the TV system used in recording the optical video disc is inconsistent with the TV system for which the optical video disc player is intended, the signal reproduced by the player is unstable with the result that the synchronising signals included therein cannot be reliably detected. Therefore, there is some risk that the PAL, NTSC or other system according to which the optical video disc has been recorded will not be reliably identified.

Recently, a so-called CDV has been developed as an outgrowth of the now widely used compact discs or CDs. A CVD is an optical disc of the same size as a CD, but with only audio signals being recorded in a radially inner track area of the disc, while video signals are recorded in a radially outer track area of the disc. In the CDV, the video signals recorded in the radially outer track area can be in accordance with the PAL, NTSC or other colour TV system, while the recording format for the audio signals recorded in the radially inner track area is the same as that currently used for CDs, and thus is according to a world-wide standard which is independent of the TV broadcasting systems varying from country to country. Thus, when a CDV is reproduced on a CDV player, the audio or music programme recorded on the CDV in accordance with the standard format can be consistently reproduced correctly even though the video signals recorded in the radially outer track area of the CDV are in accordance with a TV system that is different from the TV system for which the CDV player is intended. As a result of the foregoing, an operator of a CDV player who has successfully reproduced the audio or music programme on a CDV is likely to believe that the CDV player is defective or at fault when an attempt to reproduce the video programmes on the same CDV leads to a disturbed black-and-white picture devoid of colour. Therefore, misinterpretation of the cause of the defective or unsatisfactory video playback by the CDV player occurs frequently, and the problem of unjustified complaints or nuisance calls to the manufacturer or other source of the player has become increasingly serious.

According to the present invention there is provided a video disc player for use with a video disc having radially discrete main and lead-in track areas in which there are respectively recorded colour video information according to one of a plurality of TV systems, and code data including data identifying said one TV system used in recording the colour video information, said video disc player comprising:

head means for initially scanning and picking up said code data recorded in said lead-in track area and then scanning and picking up said colour video information recorded in said main track area;

reproducing circuit means connected to said head means and having at least one operating mode corresponding to a predetermined one of said TV systems for processing said colour video information from the head means when said one TV system used for recording is consistent with said predetermined one of the TV systems corresponding to said operating mode;

decoding means for deriving said identifying data from the head means when the latter scans said lead-in track area; and

control means for controlling at least one function of said video disc player in response to a detected inconsistency between said predetermined TV system corresponding to the operating mode and said one TV system used for recording the video disc in use as determined from the derived identifying data.

A preferred embodiment of the present invention, to be described in greater detail hereinafter, can provide an optical disc reproducing apparatus or player that is capable of reliably overcoming the above-described problem.

The preferred embodiment provides an optical disc player for use with optical discs having colour video information recorded thereon, and which avoids erroneous operation of the player with an optical disc having its recorded colour video information according to a TV system different to that for which the player is intended.

An optical disc player according to the preferred embodiment is particularly suited for use with CDVs, that is optical compact discs having radially inner and outer track areas in which audio programmes and video programmes are respectively recorded.

In one embodiment of this invention, the controlled function of the disc player is the operation of an indicator which, in response to an inconsistency between the TV system corresponding to the operating mode of the disc player and the TV system used for recording the colour video information on the disc, functions to alert the user of the disc player that the disc in use is not suited for the disc player or at least for the then established operating mode of the disc player.

In another embodiment of this invention, a monitor or other display means receives the processed colour video information from the disc player for normally providing a corresponding visual display and, in response to an inconsistency between the TV system corresponding to the operating mode of the disc player and the TV system used for recording the colour video information on the disc, an additional signal is supplied to the monitor so that the latter displays a message alerting the user to such inconsistency.

In a further embodiment of the invention, the controlled function of the disc player is the operation of a disc ejecting device which, in response to an inconsistency between the TV system corresponding to the operating mode of the disc player and the TV system used for recording the colour video information on the disc, functions to eject the disc from the disc player.

In yet another embodiment of this invention, the disc player has a plurality of operating modes corresponding to respective TV systems, for example, the NTSC system and the PAL system, and, in response to an inconsistency between the TV system corresponding to the then established operating mode and the TV system used for recording the colour video information on the disc then in use, change-over is effected to another of the operating modes so as to effect removal of such inconsistency and thereby ensure trouble-free playback of the disc.

The invention will now be described by way of example with reference to the accompanying drawings, throughout which like parts are referred to by like references, and in which:

Figure 1 is a block diagram showing an optical disc player having a control system according to an embodiment of the present invention, in association with a portion of an optical disc shown in cross section;

Figure 2 is a flow chart to which reference will be made in explaining the operation of the optical disc player control system shown in Figure 1;

Figure 3A is a diagrammatic representation of the data format in a video signal lead-in track area of a CDV to which the present invention may be advantageously applied;

Figure 3B is a diagrammatic representation of the data format of one of the subcoding channels provided for each frame in Figure 3A; and

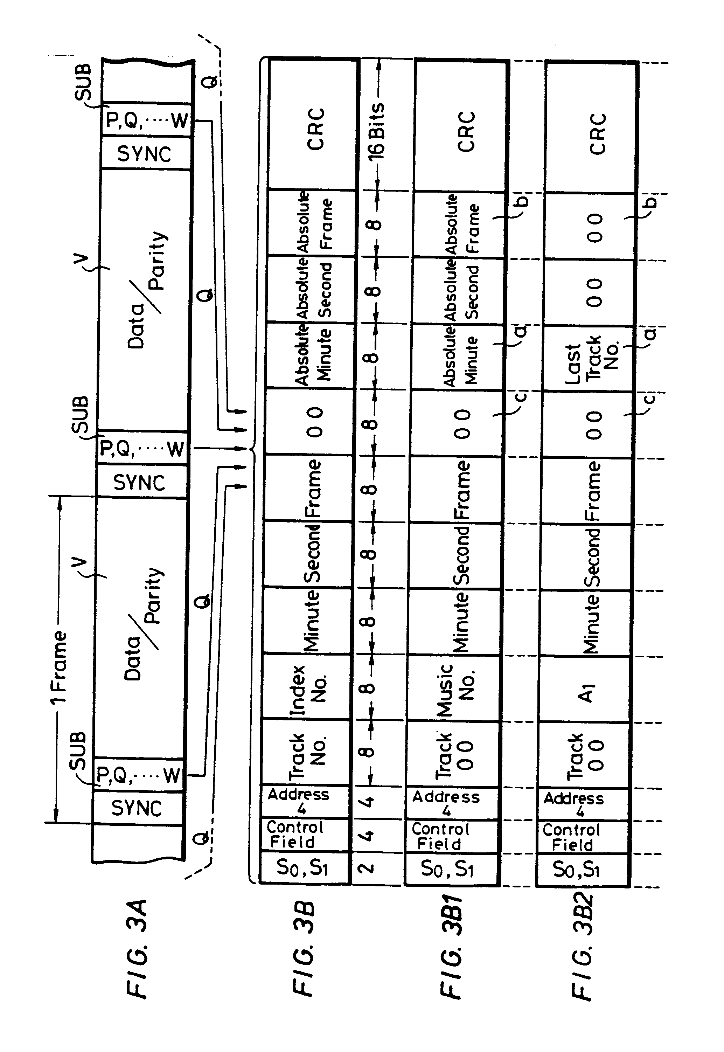

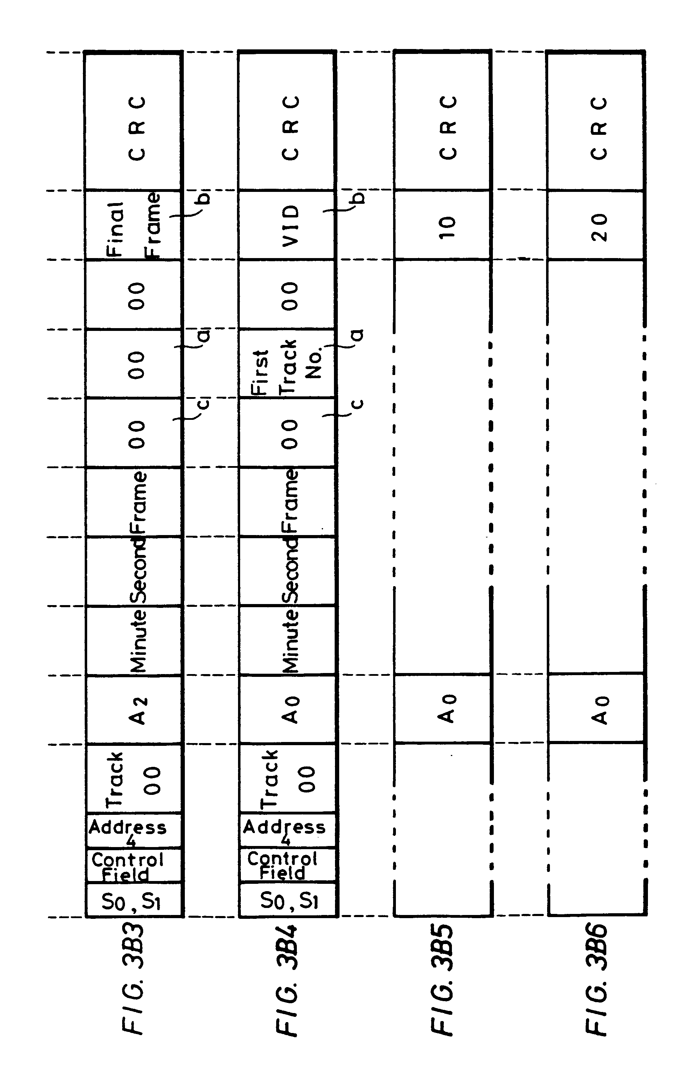

Figures 3B1 to 3B6 are diagrammatic representations similar to that of Figure 3B, but illustrating how data identifying the TV system used in recording colour video information on the optical disc or CDV are included in the format of the subcoding channel shown in Figure 3B.

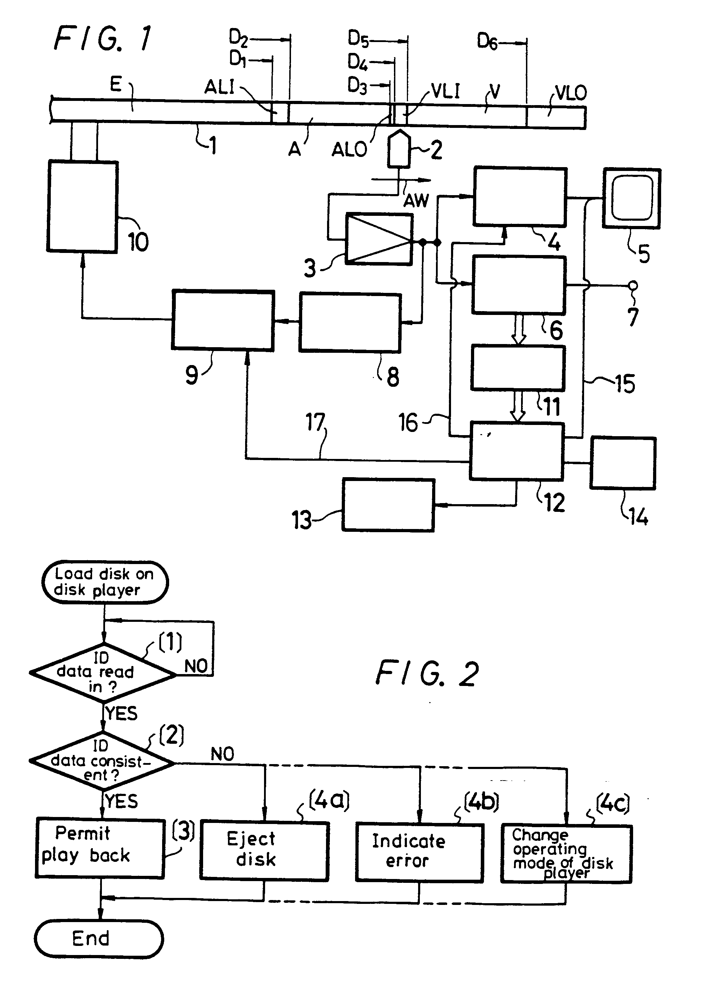

Referring initially to Figure 1, it will be seen that an optical disc 1 of the kind referred to as a CDV, and which is shown in cross section, is pre-recorded in radially discrete track areas A and V with audio signal data and video signal data, respectively. More specifically, the CDV 1 typically has an overall diameter of 12 cm, and is provided with a central non-recorded area E having a diameter $D_1$ of 4.6 cm. Arranged successively in the radially outward direction from the non-recorded central area E are an audio signal lead-in area ALI having $D_1$ as its inner diameter and an outer diameter $D_2$ of 5.0 cm, the audio signal data area A having $D_2$ as its inner diameter and an outer diameter $D_3$ of 7.4 cm, an audio signal lead-out area ALO having $D_3$ as its inner diameter and an outer diameter $D_4$ of 7.5 cm, a video signal lead-in area VLI havng $D_4$ as its inner diameter and an outer diameter $D_5$ of 7.8 cm, the video signal data area V having $D_5$ as its inner diameter and an outer diameter $D_6$ of 11.6 cm, and a video data lead-out area VLO having $D_6$ as its inner diameter and extending to the outer periphery of the CDV 1.

The audio signal recorded in the area A is a digital audio signal occupying a relatively low frequency band and having the format adopted as a world-wide standard for compact discs (CDs). The audio signal lead-in area ALI contains recorded data, such as data identifying the time codes and frame numbers corresponding to the several musical or other audio programmes recorded in the audio area A. Such data recorded in the audio signal lead-in area ALI is read out from the latter prior to the playback or reproducing of audio signals recorded in the area A, for use in suitably controlling the operation of an optical disc player during playback of the audio signals recorded in the area A.

The video signal recorded in the area V according to any one of the presently employed colour TV systems, such as the PAL, NTSC or SECAM systems, is a carrier frequency modulated with luminance and colour video signals. Also recorded with the colour video signal in the area V is a digital audio signal in a frequency band below that of the frequency modulated video signal, that is, a digital audio signal similar in format to that generally recorded on CDs and hence to the digital audio signal recorded in the area A. The audio signals recorded with the video signals in the area V may be spoken words, vocalising and/or music related to the pictures or action represented by the respective video signals, while the audio signals recorded in the area A may be, for example, music programmes, unrelated to the video programmes recorded on the same CDV.

As is further shown diagrammatically in Figure 1, an optical disc player for use with the CDV 1 comprises an optical pick-up device or head 2 suitably positioned in opposing relation to the read-out surface of the rotatably mounted CDV 1, and being movable in the radial direction of the CDV 1 while the latter is rotated on a turntable or with a spindle by a disc spindle drive motor 10. During reproducing or playback operations of the optical disc player, the head 2 is moved in the radially outward direction, as indicated by an arrow AW, for scanning spiral tracks on the rotated CDV 1 so as to pick up or reproduce the signals recorded on such tracks.

The signals reproduced by the optical pick-up or head 2 are supplied through an RF amplifier 3 to a video signal processing circuit 4 and also to an audio signal processing circuit 6. Processed colour video information from the video signal processing circuit 4 is supplied to a monitor or other display device 5 for normally providing a corresponding visual display when the head 2 is scanning tracks in the area V and thereby reproducing colour video signals or information recorded thereon. In the audio signal processing circuit 6, the signals supplied thereto from the RF amplifier 3 are error-corrected and error-concealed or compensated, and the audio signal is then converted from a digital to an analog signal which is supplied to an audio output terminal 7 to which, for example, a loudspeaker or other audio transducer may be connected.

The signal from the RF amplifier 3 is further supplied to a clock-synchronising signal separator circuit 8 wherein a clock/synchronising signal is separated from the reproduced signal and is supplied to a disc drive servo circuit 9. The servo circuit 9 provides a suitable servo control signal to the disc drive spindle motor 10 by which the rotational speed of the optical disc 1 is determined and maintained.

Generally, an identifying signal is provided in the video signal lead-in area VLI of the optical disc 1 and is coded, as hereinafter described in detail, to identify the TV colour system, for example, one of the PAL, NTSC or SECAM systems, in accordance with which the video signals have been recorded in the following area V. The video signal lead-in area VLI is recorded with a standard format independent of the colour TV system used for recording the video signal, for example the standardised audio CD recording format and, therefore, the output of the head 2 when scanning the video signal lead-in area VLI is processed by the audio signal processing circuit 6 which derives the identifying signal therefrom and supplies the same through a decoder 11 to a system controller 12 by which necessary control functions are performed, as hereinafter described in detail. It will be appreciated that, since the identifying signal is recorded in the video signal lead-in area VLI which employs a standardised recording format independent of the TV system used for recording the video signals in the area V, the identifying signal in the video signal lead-in area VLI will always be reliably reproduced and decoded even though the TV system to which the recorded video signal corresponds may not be the same as that for which the optical disc player is intended.

Furthermore, the identifying signal is reproduced during scanning of the area VLI in advance of the area V in which the video signals are recorded. Thus, prior to the reproducing of the video signals which may have been recorded according to a TV system inconsistent with that for which the optical disc player is intended, the decoder 11 can extract the data identifying the TV system used in recording the optical disc from the sub-code of the demodulated, error-corrected and concealed output of the audio signal processing circuit 6. More particularly, the decoder 11 may utilise 8-bit data, as hereinafter described, to identify the recording colour TV system of the disc, and thereby permit suitable control functions or operations to be performed prior to the actual commencement of playback or reproduction of the recorded video signals.

As shown in the flow chart of Figure 2, upon the loading of the optical disc 1 into the optical disc player embodying this invention, the system controller 12 executes the following control operations.

After the optical disc has been loaded into the player, the head 2 is made to traverse the disc 1 in the radially outward direction indicated by the arrow AW in Figure 1 and a step [1] of Figure 2 is repeatedly executed until it is determined that the identifying (ID) signal recorded in the video signal lead-in area VLI has been read into the system controller 12. When the signal identifying the colour TV system used in recording the colour video signal or information in the area V on the optical disc has been read into the memory of the system controller 12, the program proceeds to a step [2] in which it is determined whether or not the colour TV system corresponding to the identifying signal read into the memory of the system controller 12 is consistent with the TV system for which the optical disc player is intended to be used.

If the TV systems are the same or consistent with each other, as represented by a YES at the decision step [2], the routine or program proceeds to a step [3] in which a flag is set to permit the playback operation of the optical disc player to proceed unimpeded and the control operations represented by the flow chart of Figure 2 are ended.

On the other hand, if the TV system represented by the identifying signal reproduced from the video signal lead-in area VLI of the optical disc 1 is inconsistent with an internal identifying signal provided in the system controller 12 for identifying the TV system for which the optical disc player is intended, that fact is represented by a NO as the answer to the decision step [2], and the routine may proceed, for example, to a step [4a] in which a disc ejection control signal is supplied from the system controller 12 to a disc ejection device 13 (Figure 1) by which the optical disc 1 is ejected from the player. Further, if the identifying signal reproduced from the video signal lead-in area VLI is inconsistent with the identifying signal or data representing the TV system for which the optical disc player is intended, the routine may proceed also to a step [4b] in which a signal is generated by the system controller 12 for operating a visual or audible alarm or indicator 14 (Figure 1) by which the user of the optical disc player is alerted that the optical disc in use is not suited for the disc player, or at least not suited for its present operating mode.

Alternatively, when the identifying signal reproduced from the video signal lead-in area VLI of the optical disc 1 for identifying the colour TV system according to which the colour video signal or information has been recorded on the optical disc is inconsistent with the indicating signal or data identifying the colour TV system for which the optical disc player is intended, the system controller 12 may respond to such inconsistency by supplying to the monitor or display means 5, a signal causing the monitor 5 to display a message alerting the user of the optical disc player to such inconsistency. Thus, for example, the displayed message may read "This Player is to be Used for NTSC Discs Only. Don't Play PAL Discs." The displayed message may be superposed on the normal video display or take the place of the latter.

Following the operation of the disc ejection device 13 or the indicator 14, or the displaying of a message by the monitor 5, the control operations are ended.

In the above description of embodiments of this invention, it has been assumed that the CDV or other optical disc player embodying this invention has an operating mode suitable for use only in connection with optical discs having video signals recorded in accordance with only one predetermined colour TV system. However, the present invention may be embodied in a CDV player selectively capable of different modes of operation for use with CDVs having their video signals recorded in accordance with different colour TV systems, for example, the NTSC and PAL systems. In that case, if the then established mode of the optical disc player is not consistent with the colour TV system represented by the identifying signal read-in at the step [2], the system controller 12 of the optical disc player capable of selective operation as a PAL disc player or as an NTSC disc player provides suitable control signals for changing the operating mode of the disc player, as at a step [4c] in Figure 2. Such control signals are supplied through a line 16 to the video signal processing circuit 4, and through a line 17 to the servo circuit 9, so as to effect a change-over operation by which a suitable video signal processing circuit and a rotary disc speed characteristic of a respective operating mode are selected that are proper for the colour TV system with which the CDV or other optical disc has been recorded.

It will be appreciated that, in the optical disc player control system described above, by detecting the identifying signal recorded on the CDV for indicating the colour TV system in accordance with which the video signals are recorded, it is possible to execute the necessary control operations with substantial ease so as to ensure that, in the event of an inconsistency between the colour TV system with which the CDV is recorded and the colour TV system for which the player is intended, the cause of a defective or disturbed reproduced picture will be immediately made apparent or corrected.

The above-mentioned colour TV system identifying signal is desirably provided at the sub-code area of the video signal lead-in area VLI of the optical disc 1 recorded according to the CDV format. In accordance with such format, the sub-codes are symbols formed of 8 bits which are recorded for each frame (or block), as shown in Figure 3A. The sub-codes, apart from containing data for identifying the colour TV system used for the video signals recorded in the area V, contain data for performing programme functions, for example, for locating the starting points of various video programmes and the associated digital audio recorded in the area V, or for reproducing or playing back such video programmes and associated digital audio in a predetermined order. In this case, sub-coding channels P, Q, R, S, T, U, V and W are provided for 8-bit data. Bits of the sub-coding channels P and Q are utilised to perform the above-mentioned programme functions, that is, to locate the starting points of desired programmes or to achieve the playback of the programmes in a desired order.

Referring now to Figure 3B, it will be seen that a coding data series is formed by re-arranging data in the channel Q of sub-code data SUB recorded at every frame of digital audio data accompanying a video signal recorded in the video data area V (Figure 3A). A suitable coding method for the sub-code and the audio data is disclosed in detail in US Patent No. US-A-4 541 093 (issued 10 September 1985). In the coding data series shown in Figure 3B, a track number, an index number, a running time of a music programme in minutes, seconds and frames, an absolute or total running time of the music programme again given in absolute minutes, seconds and frames, and the like, are sub-coded according to the predetermined sub-coding method. It will be seen in Figure 3B that the signal format employed is similar to that referred to as "address (mode) 4" used on optical video discs and on CDVs.

Figures 3B1 to 3B4 illustrate respective data formats of coded data recorded in the video signal lead-in area VLI and which correspond to the above-described data format shown in Figure 3B. In such a case, "00" represents the number of the track in the "Track No." area, and a Table of Contents, referred to as a "TOC", is recorded in the "Index No." area and in the area for the "absolute running time". More specifically, the "Index No." area is used as a pointer in which is provided a music or video programme number for each music and/or picture programme recorded on the CDV (Figure 3B1). Other frames are provided which have pointers A1, A2 and A0, for example, as shown in Figures 3B2, 3B3 and 3B4, respectively. By way of example, the music number of the first recorded music programme associated with a video programme is provided in the area a of the absolute running time of the frame having the frame pointer A0 (Figure 3B4). The music number of the last music programme associated with a recorded video programme is similarly provided in the area a of the absolute running time of the frame having the pointer A1 (Figure 3B2). The absolute running time up to the end of the last music programme associated with a recorded video programme is provided in the absolute running time area of the frame having the pointer A2 (Figure 3B3). Further, an identifying signal (VID) is provided in the area b, that is, the frame designation, of the absolute running time of the frame having the pointer A0 (Figure 3B4). More specifically, in the 2 digit BCD notation of 8 bits, "10" indicates the data format of a stereo audio signal recorded on a CDV having its video recorded with the NTSC colour TV system (Figure 3B5); "11" indicates the data format of a bilingual audio signal recorded on a CDV having its video signals recorded with the NTSC colour TV system; "12" indicates the data format of a stereo audio signal recorded on a video disc having its video signals recorded with the NTSC colour TV system; "13" indicates the data format of a bilingual audio signal recorded on a video disc having its video signals recorded with the NTSC colour TV system; "20" indicates the data format of a stereo audio signal recorded on a CDV having its video signals recorded with the PAL colour TV system (Figure 3B6); "21" indicates the data format of a bilingual audio signal recorded on a CDV having its video signals recorded with the PAL colour TV system; "22" indicates the data format of a stereo audio signal recorded on a video disc having its video signals recorded with the PAL colour TV system; and "23" indicates the data format of a bilingual audio signal recorded on a video disc having its video signals recorded with the PAL colour TV system.

Thus, merely by determining whether the first digit of the 2 digit BCD notation in the area bin FIgure 3B4 is "1", as in Figure 3B5, or "2" as in FIgure 3B6, it is possible to identify whether the loaded optical disc has video signals recorded thereon in accordance with the NTSC colour TV system or the PAL colour TV system, respectively. In a similar manner, an optical disc having video signals recorded in accordance with the SECAM system may be readily identified in a similar manner.

Alternatively, the undefined area c in each of Figures 3B1 to 3B4 between the indication of the running time of the respective music programme and the indication of the absolute running time may be used to include the data or identifying signal indicating the colour TV system used for recording the respective video signal or programme. Moreover, if desired, the TV colour system identifying signal may be provided by utilising, in the "Index No." area, a numeral larger than A3, that is, a numeral which has not yet been defined in the "Index No." area. It is also possible to provide the identifying signal for indicating the colour TV system used in recording the video signals by similarly using any available ones of the sub-code channels R to W other than the channels P and Q.

Although the present invention is particularly advantageous when applied to a CDV player, it can be applied to any other video disc reproducing apparatus or player for reproducing video discs (such as optical video discs) having video signals recorded in a main track area of the disc and an identifying signal which may be recorded in a lead-in track area which is radially discrete from the main track area and which is scanned in advance of the latter for reproducing the identifying signal and thereby indicating the colour TV system used for recording te video signals. In such a case, since the format used for recording the lead-in track area is independent of the colour TV system employed in recording the video signals, the identifying signal in the lead-in track area is reliably detected and reproduced when scanning the lead-in track area even if the optical disc on the player has had its video signals recorded in accordance with a colour TV system that is different from the colour TV system for which the player is intended.

## Claims

1. A video disc player for use with a video disc (1) having radially discrete main and lead-in track areas (V, VLI) in which there are respectively recorded colour video information according to one of a plurality of TV systems, and code data including data identifying said one TV system used in recording the colour video information, said video disc player comprising:

     head means (2) for initially scanning and picking up said code data recorded in said lead-in track area (VLI) and then scanning and picking up said colour video information recorded in said main track area (V);

     reproducing circuit means (3 to 6) connected to said head means (2) and having at least one operating mode corresponding to a predetermined one of said TV systems for processing said colour video information from the head means (2) when said one TV system used for recorded is consistent with said predetermined one of the TV systems corresponding to said operating mode;

     decoding means (11) for deriving said identifying data from the head means (2) when the latter scans said lead-in track area (VLI); and

     control means (12) for controlling at least one function of said video disc player in response to a detected inconsistency between said predetermined TV system corresponding to the operating mode and said one TV system used for recording the video disc in use as determined from the derived identifying data.

2. A disc player according to claim 1, comprising indicating means (14) connected to said control means (12), and wherein the or one function controlled in response to said inconsistency is operation of said indicating means (14) for alerting a user of the disc player that the disc (1) in use is not suited for said operating mode of the disc player.

3. A disc player according to claim 1 or claim 2, comprising display means (5) for receiving the processed colour video information from said reproducing circuit means (3 to 6) thereby normally to provide a corresponding visual display, and wherein said control means (12) responds to said inconsistency by supplying to said display means (5) a signal causing said display means to display a message alerting the user to said inconsistency, the displaying of said message being the or one controlled function.

4. A disc player according to claim 1, claim 2 or claim 3, comprising disc ejecting means (13) for removing a disc (1) from said disc player, and wherein said control means (12) responds to said inconsistency by operating said disc ejecting means (13) so that the removal from the disc player of a disc (1) recorded according to a TV system that is inconsistent with said predetermined TV system corresponding to the operating mode of the disc player is the or one controlled function.

5. A disc player according to any one of the preceding claims, wherein said reproducing circuit means (3 to 6) has another operating mode corresponding to another of said TV systems, and said reproducing circuit means (3 to 6) is changeable between said one operating mode and said other operating mode for processing said colour video information from said head means (2) when said disc (1) has been recorded with the TV system to which the operating mode of the reproducing circuit means (3 to 6) corresponds, and wherein said control means (12) responds to said inconsistency by changing over said reproducing circuit means (3 to 6) between said operating modes so as to remove said inconsistency as the or one controlled function.

6. A disc player according to any one of the preceding claims, wherein said plurality of TV systems includes at least two of the NTSC, PAL and SECAM systems.

7. A disc player according to any one of the preceding claims, wherein said colour video information is recorded on said disc (1) as a frequency modulated signal in said main track area (V), said main track area (V) further has a digital audio signal recorded therein in a frequency band below that of said frequency modulated signal and with a format that does not vary with said TV systems, and said lead in track area (VLI) is recorded with said format which includes subcoding channels at least one of which contains said data identifying the TV system used for recording the colour video information, and said reproducing circuit means (3 to 6) includes video processing means (4) for demodulating said frequency modulated signal and thereby deriving said colour video information therefrom, and audio processing means (6) for deriving said audio signal from said head means (2) when scanning said track area (V) and for deriving said code data in the sub-coding channels from said head means (2) when scanning said lead-in track area (VLI), and wherein said decoding means (11) is operable to provide said data identifying the TV system used for recording said colour video information from said code data derived by said audio processing means (6).

8. A disc player according to any one of the preceding claims, for use with an optical disc (1), wherein the head means comprises an optical head (2).

9. A disc player according to claim 8 wherein said optical disc is a CDV (1) having an audio track area (A) in which only digital audio signals are recorded with the same format as said lead-in track area (VLI), and said lead-in track area (VLI) is radially disposed between said audio track area (A) and said main track area (V), and wherein said head means (2) is operable normally to scan said CDV (1) in the radial direction from said audio track area (A) to said main track area (V).

**Patentansprüche**

1. Videoplattenspieler für die Verwendung mit einer Videoplatte (1), die radial getrennte Haupt- und Einlaufspurbereiche (V, VLI) aufweist, in welchen eine Farbvideoinformation entsprechend einem System aus einer Vielzahl von TV- Systemen bzw. Codedaten aufgezeichnet sind, die Daten umfassen, um das eine TV - System zu identifizieren, das beim Aufzeichnen der Farbvideoinformation verwendet wurde, wobei der Videoplattenspieler folgendes umfaßt:

eine Kopfeinrichtung (2) zum anfänglichen Abtasten und Aufzeichnen dieser Codedaten, die in dem Einlaufspurbereich (VLI) aufgezeichnet sind und anschließendem Abtasten und Aufzeichnen der Farbvideoinformation, die in dem Hauptspurbereich (V) aufgezeichnet wurde;

Wiedergabeschaltungseinrichtungen (3 bis 6), die mit der Kopfeinrichtung (2) verbunden sind und wenigstens eine Betriebsart haben, die einem der vorgegebenen TV- Systeme zur Verarbeitung der Farbvideoinformation der Kopfeinrichtung (2) entspricht, wenn das eine TV - System, das für die Aufzeichnung verwendet wurde, verträglich mit einem der vorgegebenen TV - Systeme ist, das der genannten Betriebsart entspricht;

eine Decodiereinrichtung (11) zur Gewinnung der Identifikationsdaten der Kopfeinrichtung (2), wenn letztere einen Einlaufspurbereich (VLI) abtastet, und

eine Steuereinrichtung (12) zum Steuern wenigstens einer Funktion des Videoplattenspielers als Antwort auf eine ermittelte Unvereinbarkeit mit dem vorgegebenen TV- System, das der Betriebsart und dem TV - System entspricht, das zum Aufzeichnen der in Gebrauch befindlichen Videoplatte wie aus den gewonnenen Identifikationsdaten bestimmt verwendet wird.

2. Plattenspieler nach Anspruch 1, der eine Anzeigeeinrichtung (14) umfaßt, die mit der Steuereinrichtung (12) verbunden ist, wobei die oder eine Funktion, die durch die genannte Unvereinbarkeit gesteuert ist, der Betrieb der Anzeigeeinrichtung (14) ist, um einen Benutzer des Plattenspielers vorzuwarnen, daß die in Gebrauch befindliche Platte (1) nicht für die Betriebsart des Plattenspielers geeignet ist.

3. Plattenspieler nach Anspruch 1 oder 2, der eine Anzeigeeinrichtung (5) zum Empfang der verarbeiteten Farbvideoinformation von den Wiedergabeschaltungseinrichtungen (3 bis 6) umfaßt, um dadurch normalerweise eine entsprechende optische Anzeige zu erreichen, und wobei die Steuereinrichtung (12) auf die Unvereinbarkeit antwortet, indem die Anzeigeeinrichtung (5) mit einem Signal beliefert wird, das die Anzeigeeinrichtung veranlasst, eine Mitteilung anzuzeigen, um den Benutzer auf die Unvereinbarkeit vorzuwarnen, wobei die Anzeige der Mitteilung die oder eine Steuerfunktion darstellt.

4. Plattenspieler nach Anspruch 1, 2 oder 3, der eine Einrichtung (13) zur Ausgabe der Platte aufweist, um eine Platte (1) aus dem Plattenspieler zu entfernen, und wobei die Steuereinrichtung (12) auf die Unvereinbarkeit durch in Betrieb setzen der Plattenausgabeeinrichtung (13) antwortet, so daß die Ausgabe einer Platte (1) aus dem Plattenspieler, die entsprechend einem TV- System aufgezeichnet wurde, das mit dem vorgegebenen TV- System unvereinbar ist, entsprechend der Betriebsart des Plattenspielers die oder eine Steuerfunktion darstellt.

5. Plattenspieler nach einem der vorhergehenden Ansprüche, wobei die Wiedergabeschaltungseinrichtungen (3 bis 6) eine andere Betriebsart entsprechend einem der anderen TV- Systeme haben, und wobei die Wiedergabeschaltungseinrichtungen (3 bis 6) zwischen einer Betriebsart und der anderen Betriebsart zur Verarbeitung der Farbvideoinformation der Kopfeinrichtung (2) schaltbar sind, wenn die Platte (1) mit dem TV- System aufgezeichnet wurde, das der Betriebsart der Wiedergabeschaltungseinrichtungen (3 bis 6) entspricht, und wobei die Steuereinrichtung (12) auf die Unvereinbarkeit durch Umschalten der Wiedergabeschaltungseinrichtungen (3 bis 6) zwischen den Betriebsarten antwortet, um so die Unvereinbarkeit zu beseitigen als die oder eine Steuerfunktion .

6. Plattenspieler nach einem der vorhergehenden Ansprüche, wobei die Vielzahl von TV- Systemen wenigstens zwei von den NTSC-, PAL- und SECAM- Systemen umfaßt.

7. Plattenspieler nach einem der vorhergehenden Ansprüche, wobei die Farbvideoinformation auf der Platte (1) als frequenzmoduliertes Signal in dem Hauptspurbereich (V) aufgezeichnet ist, wobei der Hauptspurbereich (V) weiterhin ein digitales Audiosignal aufweist, das darin in einem Frequenzband unter dem genannten frequenzmodulierten Signal mit einem Format aufgezeichnet ist, das nicht mit den TV- Systemen variiert, wobei der Einlaufspurbereich (VLI) mit dem Format aufgezeichnet wird, welches Subcode- Kanäle umfaßt, von denen wenigstens einer die Daten enthält, um das TV- System, das zum Aufzeichnen der Farbvideoinformation verwendet wird, zu identifizieren, wobei die Wiedergabeschaltungseinrichtungen (3 bis 6) eine Videosignalverarbeitungseinrichtung (4) zur Demodulation des frequenzmodulierten Signals umfaßt und dadurch daraus die Farbvideoinformation gewinnt, und eine Audioverarbeitungseinrichtung (6) zur Gewinnung des Audiosignals von der Kopfeinrichtung (2), wenn der Hauptspurbereich (V) abgetastet wird, sowie zur Gewinnung der Codedaten in den Subcode- Kanälen der Kopfeinrichtung (2), wenn der Einlaufspurbereich (VLI) abgetastet wird, und wobei die Einrichtung (11) zur Decodierung fähig ist, die Daten vorzusehen, um das TV- System, das zum Aufzeichnen der Farbvideoinformation verwendet wird, aus den Codedaten zu identifizieren, die durch die audioverarbeitende Einrichtung (6) gewonnen werden.

8. Plattenspieler nach einem der vorhergehenden Ansprüche, zum Gebrauch mit einer optischen Platte (1), wobei die Kopfeinrichtung einen optischen Kopf (2) umfaßt.

9. Plattenspieler nach Anspruch 8, wobei die optische Platte eine CDV (1) ist, die einen Audiospurbereich (A) aufweist, in welchem nur digitale Audiosignale mit demselben Format wie beim Einlaufspurbereich (VLI) aufgezeichnet sind, und wobei der Einlaufspurbereich (VLI) radial zwischen dem Audiospurbereich (A) und dem Hauptspurbereich (V) angeordnet ist, und wobei die Kopfeinrichtung (2) normalerweise in der Lage ist, die CDV (1) in der radialen Richtung vom Audiospurbereich (A) zum Hauptspurbereich abzutasten.

**Revendications**

1. Lecteur de disque vidéo destiné à être utilisé avec un disque vidéo (1) possédant des zones de pistes principales et initiales discrètes radialement disposées (V, VLI) dans lesquelles sont respectivement enregistrées une information vidéo en couleurs selon l'un de plusieurs systèmes de télévision et des données de code comportant des données qui identifient ledit système de télévision employé pour enregistrer l'information vidéo en couleurs, ledit lecteur de disque vidéo comprenant :

   un moyen formant une tête (2) servant à initialement balayer et capter lesdites données de code enregistrées dans ladite zone de pistes initiales (VLI), puis à balayer et capter ladite information vidéo en couleurs enregistrée dans ladite zone de pistes principales (V) ;

   un moyen formant un circuit de reproduction (3 à 6) connecté audit moyen formant une tête (2) et possédant au moins un mode de fonctionnement correspondant à l'un, prédéterminé, desdits systèmes de télévision afin de traiter l'information vidéo en couleurs venant dudit moyen formant une tête (2) lorsque ledit système de télévision utilisé pour l'enregistrement est compatible avec celui, prédéterminé, des systèmes de télévision qui correspond audit mode de fonctionnement ;

   un moyen de décodage (11) servant à obtenir lesdites données d'identification de la part du moyen formant une tête (2) lorsque ce dernier balaie ladite zone de pistes intiales (VLI) ; et

   un moyen de commande (12) servant à commander au moins une fonction dudit lecteur de disque vidéo en réponse à une incompatibilité détectée entre ledit système de télévision prédéterminé correspondant au mode de fonctionnement et ledit système de télévision utilisé pour enregistrer le disque vidéo pendant l'utilisation tel que déterminé à partir des données d'identification obtenues.

2. Lecteur de disque selon la revendication 1, comprenant un moyen d'indication (14) connecté audit moyen de commande (12), et où la fonction, ou une fonction, commandée en réponse à ladite incompatibilité est la mise en action dudit moyen d'indication (14) visant à alerter l'utilisateur du lecteur de disque que le disque (1) en utilisation n'est pas approprié audit mode de fonctionnement du lecteur de disque.

3. Lecteur de disque selon la revendication 1 ou 2, comprenant un moyen d'affichage (5) servant à recevoir l'information vidéo en couleurs traitée de la part dudit moyen qui forme un circuit de reproduction (3 à 6) de manière à produire normalement un affichage visuel correspondant, et où ledit moyen de commande (12) répond à ladite incompatibilité en délivrant audit moyen d'affichage (5) un signal amenant ledit moyen d'affichage à afficher un message alertant l'utilisateur de l'existence de ladite incompatibilité, l'affichage dudit message constituant la fonction, ou une fonction, commandée.

4. Lecteur de disque selon la revendication 1, 2 ou 3, comprenant un moyen (13) d'éjection de disque servant à enlever un disque (1) dudit lecteur de disque, et où ledit moyen de commande (12) répond à ladite incompatibilité en activant ledit moyen (13) d'éjection de disque de façon que l'enlèvement, du lecteur de disque, d'un disque (1) enregistré selon un système de télévision qui n'est pas compatible avec ledit système de télévision prédéterminé correspondant au mode de fonctionnement du lecteur de disque soit l'opération, ou une opération, commandée.

5. Lecteur de disque selon l'une quelconque des revendications précédentes, où ledit moyen qui forme un circuit de reproduction (3 à 6) possède un autre mode de fonctionnement correspondant à un autre desdits systèmes de télévision, et ledit moyen qui forme un circuit de reproduction (3 à 6) peut être commuté entre ledit premier mode de fonctionnement et ledit autre mode de fonctionnement afin de traiter ladite information vidéo en couleurs venant dudit moyen formant une tête (2) lorsque ledit disque (1) a été enregistré avec le système de télévision auquel le mode de fonctionnement du moyen qui forme un circuit de reproduction (3 à 6) correspond, et où ledit moyen de commande (12) répond à ladite incompatibilité en effectuant la commutation dudit moyen qui forme un circuit de reproduction (3 à 6) entre lesdits modes de fonctionnement, si bien que la suppression de ladite incompatibilité est la fonction, ou une fonction, commandée.

6. Lecteur de disque selon l'une quelconque des revendications précédentes, où lesdits systèmes de télévision comprennent au moins deux des systèmes NTSC, PAL et SECAM.

7. Lecteur de disque selon l'une quelconque des revendications précédentes, où ladite information vidéo en couleurs est enregistrée sur ledit disque (1) sous la forme d'un signal modulé en fréquence dans ladite zone de pistes principales (V), ladite zone de pistes principales (V) possède également un signal audio numérique qui y est enregistré dans une bande de fréquence inférieure à celle dudit signal modulé en fréquence et avec un format qui ne varie pas en fonction desdits systèmes de télévision, ladite zone de pistes initiales (VLI) est enregistrée suivant ledit format qui comporte des canaux de sous-codage dont au moins un contient lesdites données identifiant le système de télévision utilisé pour l'enregistrement de l'information vidéo en couleurs, et ledit moyen qui forme un circuit de reproduction (3 à 6) comporte un moyen de traitement vidéo (4) servant à démoduler ledit signal modulé en fréquence et à ainsi en extraire ladite information vidéo en couleurs et un moyen de traitement audio (6) servant à obtenir ledit signal audio de la part dudit moyen qui forme une tête (2) lors du balayage de ladite zone de pistes principales (V) et à obtenir lesdites données de code contenues dans les canaux de sous-codage de la part dudit moyen qui forme une tête (2) lors du balayage de ladite zone de pistes initiales (VLI), et où ledit moyen de décodage (11) a pour fonction de produire lesdites données identifiant le système de télévision utilisé pour enregistrer ladite information vidéo en couleurs à partir desdites données de code obtenues par ledit moyen de traitement audio (6).

8. Lecteur de disque selon l'une quelconque des revendications précédentes, destiné à être utilisé avec un disque optique (1), où le moyen formant une tête comprend une tête optique (2).

9. Lecteur de disque selon la revendication 8, où ledit disque optique est un CDV, c'est-à-dire un disque compact avec vidéo, (1) possédant une zone de pistes audio (A) dans laquelle seuls des signaux audio numériques sont enregistrés suivant le même format que ladite zone de pistes initiales (VLI), et ladite zone de pistes initiales (VLI) est disposée radialement entre ladite zone de pistes audio (A) et ladite zone de pistes principales (V), et où ledit moyen formant une tête (2) a normalement pour fonction de balayer ledit CDV (1) suivant la direction radiale, de ladite zone de pistes audio (A) à ladite zone de pistes principales (V).

# FIG. 1

D₂

D₁

E   ALI   D₅   D₆

D₄

D₃   VLI   V   VLO

1   A   ALO   2

AW

10

3   4   5

6   7

9   8   11   15

17   16

13   12   14

# FIG. 2

Load disk on
disk player

(1)
ID
data read
in ?   NO

YES

(2)
ID
data consist-
ent ?   NO

YES   (4a)   (4b)   (4c)

(3)
Permit
play back   Eject
disk   Indicate
error   Change
operating
mode of disk
player

End

*FIG. 3A*

| | SYNC | P,Q,....W | Data / Parity | SYNC | P,Q,....W | Data / Parity | SYNC | P,Q,....W |
|---|---|---|---|---|---|---|---|---|

1 Frame — SUB — V

Q — Q — Q — Q

*FIG. 3B*

| S0,S1 | Control Field | Address 4 | Track No. | Index No. | Minute | Second | Frame | 0 0 | Absolute Minute | Absolute Second | Absolute Frame | CRC |
|---|---|---|---|---|---|---|---|---|---|---|---|---|
| 2 | 4 | 4 | ←8→ | ←8→ | ←8→ | ←8→ | ←8→ | ←8→ | ←8→ | ←8→ | ←8→ | 16 Bits |

*FIG. 3B1*

| S0,S1 | Control Field | Address 4 | Track 0 0 | Music No. | Minute | Second | Frame | 0 0 | Absolute Minute | Absolute Second | Absolute Frame | CRC |
|---|---|---|---|---|---|---|---|---|---|---|---|---|
| | | | | | | | | | c | a | b | |

*FIG. 3B2*

| S0,S1 | Control Field | Address 4 | Track 0 0 | A1 | Minute | Second | Frame | 0 0 | Last Track No. | 0 0 | 0 0 | CRC |
|---|---|---|---|---|---|---|---|---|---|---|---|---|
| | | | | | | | | | c | a | b | |

EP 0 301 809 B1

EP 0 301 809 B1

**FIG. 3B3**

| S0, S1 | Control Field | Address 4 | Track 00 | A2 | Minute | Second | Frame | 00 | 00 | 00 | Final Frame | CRC |
|---|---|---|---|---|---|---|---|---|---|---|---|---|
| | | | | | | | | | c | a | b | |

**FIG. 3B4**

| S0, S1 | Control Field | Address 4 | Track 00 | A0 | Minute | Second | Frame | 00 | First Track No. | 00 | VID | CRC |
|---|---|---|---|---|---|---|---|---|---|---|---|---|
| | | | | | | | | c | a | | b | |

**FIG. 3B5**

| | | | A0 | | | 10 | CRC |
|---|---|---|---|---|---|---|---|

**FIG. 3B6**

| | | | A0 | | | 20 | CRC |
|---|---|---|---|---|---|---|---|